(19) **Europäisches Patentamt / European Patent Office / Office européen des brevets**

(11) **EP 4 564 473 A1**

(12) # EUROPEAN PATENT APPLICATION
published in accordance with Art. 153(4) EPC

(43) Date of publication:
**04.06.2025 Bulletin 2025/23**

(21) Application number: **23846259.2**

(22) Date of filing: **13.07.2023**

(51) International Patent Classification (IPC):
$H01M\ 4/38$ (2006.01)    $H01G\ 11/06$ (2013.01)
$H01G\ 11/30$ (2013.01)    $H01G\ 11/46$ (2013.01)
$H01G\ 11/62$ (2013.01)    $H01M\ 4/36$ (2006.01)
$H01M\ 4/48$ (2010.01)

(52) Cooperative Patent Classification (CPC):
**H01G 11/06; H01G 11/30; H01G 11/46;
H01G 11/62; H01M 4/36; H01M 4/38; H01M 4/48;
Y02E 60/10**

(86) International application number:
**PCT/JP2023/025941**

(87) International publication number:
**WO 2024/024528 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.07.2022 JP 2022119376**

(71) Applicants:
- **National University Corporation
  Nagaoka University of Technology
  Nagaoka-shi
  Niigata 940-2188 (JP)**
- **Nippon Electric Glass Co., Ltd.
  Otsu-shi, Shiga 520-8639 (JP)**

(72) Inventors:
- **SATO, Fumitaka
  Nagaoka-shi, Niigata 940-2188 (JP)**
- **HONMA, Tsuyoshi
  Nagaoka-shi, Niigata 940-2188 (JP)**
- **YAMAUCHI, Hideo
  Otsu-shi, Shiga 520-8639 (JP)**
- **TSUNODA, Kei
  Otsu-shi, Shiga 520-8639 (JP)**
- **NAGAKANE, Tomohiro
  Otsu-shi, Shiga 520-8639 (JP)**

(74) Representative: **Tetzner, Michael
  Tetzner & Partner mbB
  Patent- und Rechtsanwälte
  Van-Gogh-Strasse 3
  81479 München (DE)**

(54) **NEGATIVE ELECTRODE ACTIVE MATERIAL FOR SODIUM-ION SECONDARY BATTERY**

(57) Provided is a negative electrode active material for a sodium-ion secondary battery that exhibits stable battery characteristics when repeatedly charged and discharged. A negative electrode active material for a sodium-ion secondary battery contains: an amorphous phase containing $SiO_2$; and a Fe-Sn-based alloy.

EP 4 564 473 A1

## Description

[Technical Field]

The present invention relates to negative electrode active materials for sodium-ion secondary batteries, the negative electrode active materials for use in, for example, portable electronic devices and electric vehicles.

[Background Art]

Recently, with the widespread use of portable electronic devices, electric vehicles, and so on, lithium-ion secondary batteries have been developed actively. However, there are concerns about depletion of resources of lithium for use in lithium-ion secondary batteries. As a solution to this, sodium-ion secondary batteries in which Na ions are used as an alternative to Li ions have been under consideration.

Particularly, metal Sn has a theoretical capacity as high as 847 mAhg when alloyed with sodium and is therefore known as a plausible candidate for a negative electrode material in a sodium-ion secondary battery. Metal Sn repeats a reaction of $4Sn+15Na^++15e^- \longleftrightarrow Na_{15}Sn_4$ upon charge and discharge. Meanwhile, metal Sn changes, due to alloying during charge and discharge, its volume significantly up to 4.2 times the volume before the alloying and, therefore, the question is a decrease in capacity due to breakage of the electrode. As a method for mitigating the volume change during charge and discharge, there is proposed a method of precipitating metal Sn in a glass matrix (see, for example, Patent Literature 1).

[Citation List]

[Patent Literature]

[PTL 1] JP-A-2014-229539

[Summary of Invention]

[Technical Problem]

In a crystallized glass formed by precipitating metal Sn therein, amorphous components, such as $SiO_2$, $P_2O_5$, and $B_2O_3$, contained in the glass matrix act as a buffer that mitigates expansion and contraction of the Sn component. However, these components cannot sufficiently mitigate the volume change during charge and discharge, which presents a problem of the battery characteristics being likely to be unstable upon repeated charge and discharge.

The present invention has been made in view of the above situations and therefore has an object of providing a negative electrode active material for a sodium-ion secondary battery that exhibits stable battery characteristics when repeatedly charged and discharged.

[Solution to Problem]

A negative electrode active material for a sodium-ion secondary battery according to the present invention contains: an amorphous phase containing $SiO_2$; and a Fe-Sn-based alloy.

As just described, the negative electrode active material for a sodium-ion secondary battery according to the present invention contains a Fe-Sn-based alloy. $FeSn_2$, a type of Fe-Sn-based alloy, repeats a reaction of $2FeSn_2+15Na^++15e^- \longleftrightarrow 2Fe+Na_{15}Sn_4$ upon charge and discharge. Compared to metal Sn, $FeSn_2$ exhibits a small volume change due to alloying during charge and discharge. Furthermore, the negative electrode active material for a sodium-ion secondary battery according to the present invention contains an amorphous phase containing $SiO_2$. The amorphous phase acts as a buffer that mitigates expansion and contraction of a Fe-Sn-based alloy, such as $FeSn_2$. Since the volume change due to alloying during charge and discharge is small and the amorphous phase exists as a buffer for mitigating the volume change, the negative electrode active material can exhibit stable battery characteristics, particularly when repeatedly charged and discharged.

The negative electrode active material for a sodium-ion secondary battery according to the present invention preferably contains, in terms of % by mole of oxide, 30% to 90% SnO, 2% to 69% $SiO_2$, and 1% to 20% $Fe_2O_3$.

In the negative electrode active material for a sodium-ion secondary battery according to the present invention, the Fe-Sn-based alloy is preferably $FeSn_2$.

The negative electrode active material for a sodium-ion secondary battery according to the present invention is preferably made of a crystallized glass formed by the Fe-Sn-based alloy being precipitated in a matrix made of the amorphous phase.

The negative electrode active material for a sodium-ion secondary battery according to the present invention preferably has a crystallinity of not less than 30% by mass and not more than 99% by mass.

In the negative electrode active material for a sodium-ion secondary battery according to the present invention, an amount of crystals of the Fe-Sn-based alloy is preferably not less than 0.5% by mass and not more than 70% by mass.

The negative electrode active material for a sodium-ion secondary battery according to the present invention may further contain $\beta$-Sn.

[Advantageous Effects of Invention]

The present invention enables provision of a negative electrode active material for a sodium-ion secondary battery that exhibits stable battery characteristics when repeatedly charged and discharged.

[Brief Description of Drawings]

[Fig. 1]

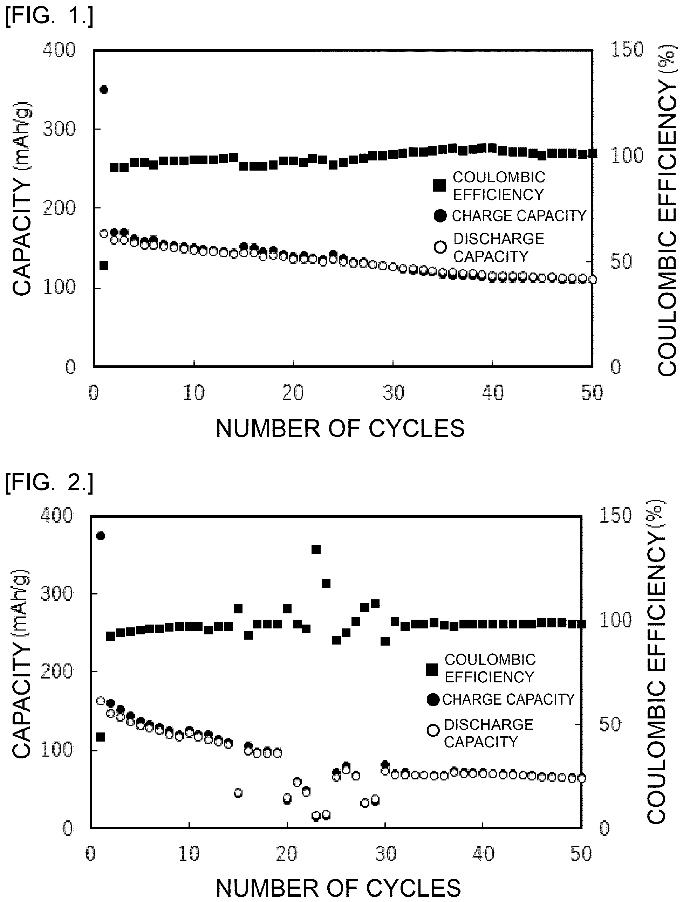

Fig. 1 is a graph showing battery characteristics in each cycle of a test cell produced in Example 3.
[Fig. 2]
Fig. 2 is a graph showing battery characteristics in each cycle of a test cell produced in Comparative Example 1.

[Description of Embodiments]

Hereinafter, a description will be given of a preferred embodiment. However, the following embodiment is merely illustrative and the present invention is not intended to be limited to the following embodiment. Throughout the drawings, members having substantially the same functions may be referred to by the same reference characters.

A negative electrode active material for a sodium-ion secondary battery (hereinafter, also referred to simply as a negative electrode active material) according to the present invention contains: an amorphous phase containing $SiO_2$; and a Fe-Sn-based alloy. Specifically, the negative electrode active material according to the present invention preferably contains, in terms of % by mole of oxide, 30% to 90% SnO, 2% to 69% $SiO_2$, and 1% to 20% $Fe_2O_3$. The reasons why the composition is limited as just described will be described below. In the following description of the composition, "%" refers to "% by mole" unless otherwise specified.

SnO is an active material component that serves as sites where sodium ions are absorbed and released. The content of SnO is, in terms of % by mole of oxide, for example, preferably not less than 30%, not less than 35%, not less than 40%, not less than 45%, and particularly preferably not less than 50%, preferably not more than 90%, not more than 80%, not more than 75%, not more than 70%, and particularly preferably not more than 68%. If the content of SnO is too small, the charge and discharge capacities per unit mass of the negative electrode active material are likely to decrease. On the other hand, if the content of SnO is too large, the amount of amorphous components in the negative electrode active material becomes relatively small, which makes it impossible to mitigate the volume change due to absorption and release of sodium ions during charge and discharge and thus makes it likely that the battery characteristics become unstable, such as a decrease in cycle characteristic.

$SiO_2$ is a component that functions as a network forming oxide and prompts the material to become amorphous. Therefore, $SiO_2$ has the effect of taking in sites of the Sn component where sodium ions are absorbed and released, thus increasing the cycle characteristic. The content of $SiO_2$ is, in terms of % by mole of oxide, for example, preferably not less than 2%, not less than 5%, not less than 10%, not less than 15%, and particularly preferably not less than 20%, preferably not more than 69%, not more than 65%, not more than 55%, not more than 45%, and particularly preferably not more than 35%. If the content of $SiO_2$ is too small, the above effect is less likely to be obtained. On the other hand, if the content of $SiO_2$ is too large, the ionic conductivity tends to decrease to decrease the discharge capacity. In addition, the amount of Sn component becomes relatively small and, therefore, the charge and discharge capacities tend to decrease.

$Fe_2O_3$ is a component that forms a Fe-Sn-based alloy, such as $FeSn_2$, by subsequent heat treatment to function as an active material that absorbs and releases sodium ions and electrons. Furthermore, $Fe_2O_3$ is a component that functions as a network forming oxide and prompts the material to become amorphous. Thus, $Fe_2O_3$ functions as a component that mitigates expansion and contraction of the Sn component, and has the effect of increasing the cycle characteristic. Moreover, $Fe_2O_3$ functions to increase the conductivity of oxide matrix components in the negative electrode active material and also has the effect of increasing the rapid charge and discharge characteristics. The

content of $Fe_2O_3$ is, in terms of % by mole of oxide, for example, preferably not less than 1%, not less than 1.5%, not less than 2%, not less than 2.5%, and particularly preferably not less than 3%, preferably not more than 20%, not more than 17%, not more than 15%, not more than 12%, and particularly preferably not more than 10%. If the content of $Fe_2O_3$ is too small, the above effects are less likely to be obtained. On the other hand, if the content of $Fe_2O_3$ is too large, the ionic conductivity tends to decrease to decrease the discharge capacity.

The negative electrode active material according to the present invention may contain, other than the above components, the following components.

$Na_2O$ is a component that increases the ionic conductivity of oxide matrix components other than the Sn component. The content of $Na_2O$ is, in terms of % by mole of oxide, for example, preferably not less than 1%, not less than 3%, not less than 5%, not less than 7%, and particularly preferably not less than 10%, preferably not more than 50%, not more than 40%, not more than 30%, not more than 25%, and particularly preferably not more than 20%. If the content of $Na_2O$ is too large, heterogeneous crystals (for example, crystals containing $Na_2O$ and $SiO_2$) are formed in large amounts and, thus, the cycle characteristic is likely to decrease.

$P_2O_5$ is, like $SiO_2$, a component that functions as a network forming oxide and prompts the material to become amorphous. Therefore, $P_2O_5$ has the effect of taking in sites of the Sn component where sodium ions are absorbed and released, thus increasing the cycle characteristic. The content of $P_2O_5$ is, in terms of % by mole of oxide, for example, preferably not less than 1%, not less than 3%, not less than 5%, and particularly preferably not less than 7%, preferably not more than 30%, not more than 25%, not more than 20%, and particularly preferably not more than 15%. If the content of $P_2O_5$ is too large, the water resistance of the negative electrode active material is likely to decrease. In addition, the amount of Sn component becomes relatively small and, therefore, the charge and discharge capacities tend to decrease.

$B_2O_3$ is also, like $SiO_2$, a component that functions as a network forming oxide and prompts the material to become amorphous. Therefore, $B_2O_3$ has the effect of taking in sites of the Sn component where sodium ions are absorbed and released, thus increasing the cycle characteristic. The content of $B_2O_3$ is, in terms of % by mole of oxide, for example, preferably not less than 1%, not less than 3%, not less than 5%, and particularly preferably not less than 7%, preferably not more than 30%, not more than 25%, not more than 20%, and particularly preferably not more than 15%. If the content of $B_2O_3$ is too large, its coordinate bond to the Sn component becomes strong, which increases the initial charge capacity, resulting in a tendency to increase the initial irreversible capacity. In addition, the amount of Sn component becomes relatively small and, therefore, the charge and discharge capacities tend to decrease.

The content of $P_2O_5+SiO_2+B_2O_3$ is, in terms of % by mole of oxide, for example, preferably not less than 2%, not less than 3%, not less than 4%, not less than 5%, not less than 10%, not less than 15%, and particularly preferably not less than 20%, preferably not more than 69%, not more than 65%, not more than 55%, not more than 45%, and particularly preferably not more than 35%. If the content of $P_2O_5+SiO_2+B_2O_3$ is too small, this makes it impossible to mitigate the volume change of the Sn component due to absorption and release of sodium ions during charge and discharge and thus causes a structural degradation and, therefore, the cycle characteristic is likely to decrease. On the other hand, if the content of $P_2O_5+SiO_2+B_2O_3$ is too large, the amount of Sn component becomes relatively small and, therefore, the charge and discharge capacities tend to decrease. Herein, "x + y + **...**" means the total content of the relevant components. All the above components may not necessarily be contained as essential components and one or some of the components may not be contained (i.e., the content of the one or some of the components may be 0%).

The negative electrode active material according to the present invention may contain $TiO_2$, $MnO$, $CuO$, $ZnO$, $MgO$, $CaO$, and $Al_2O_3$, for example, in a range of 0% to 25%, 0% to 23%, 0% to 21% or 0.1% to 20% in terms of the total content of % by mole of oxides. When the negative electrode active material contains these components, an amorphous material can be easily obtained. However, if the content of them is too large, the network formed of $SiO_2$ is likely to be broken. As a result, the volume change of the negative electrode active material due to charge and discharge may not be able to be mitigated and the cycle characteristic may decrease.

In the negative electrode active material according to the present invention, a Fe-Sn-based alloy, such as $FeSn_2$, is preferably precipitated in the inside thereof. $FeSn_2$ can be identified by powder X-ray diffraction measurement (XRD) using $CuK\alpha$ rays. Specifically, in a diffraction line profile obtained by powder X-ray diffraction measurement (XRD), respective diffraction lines having peaks at 2θ values of 35.1°, 43.9°, 61.2°, 33.7°, and 67.3° can belong to the crystal phase of $FeSn_2$ (tetragonal system, space group I4/mcm (140)).

The amount of $FeSn_2$ crystals is preferably not less than 0.5% by mass, more preferably not less than 1% by mass, even more preferably not less than 4% by mass, preferably not more than 70% by mass, more preferably not more than 60% by mass, and even more preferably not more than 55% by mass. If the amount of $FeSn_2$ crystals is too large, the amount of amorphous components in the negative electrode active material becomes relatively small, which makes it impossible to mitigate the volume change due to absorption and release of sodium ions during charge and discharge and thus tends to make the battery characteristics unstable. On the other hand, if the amount of $FeSn_2$ crystals is too small, the discharge capacity tends to decrease and the battery characteristics upon repeated charge and discharge tend to be unstable.

In the negative electrode active material according to the present invention, β-Sn may be precipitated in the inside thereof. β-Sn serves as sites where sodium ions are absorbed and released, and thus has the effect of further increasing the battery capacity. β-Sn can be identified by powder X-ray diffraction measurement (XRD) using CuKα rays. Specifically, in a diffraction line profile obtained by powder X-ray diffraction measurement (XRD), respective diffraction lines having peaks at 2θ values of 30.63° and 32.02° can belong to the crystal phase of β-Sn (tetragonal system, space group $I4_1/amd$ (141)).

The amount of β-Sn crystals is preferably not less than 1% by mass, more preferably not less than 5% by mass, even more preferably not less than 10% by mass, preferably not more than 70% by mass, more preferably not more than 60% by mass, and even more preferably not more than 50% by mass. If the amount of β-Sn crystals is too large, the amount of amorphous components in the negative electrode active material becomes relatively small, which makes it impossible to mitigate the volume change due to absorption and release of sodium ions during charge and discharge and thus tends to make the battery characteristics unstable. On the other hand, if the amount of β-Sn crystals is too small, the discharge capacity tends to decrease.

In the negative electrode active material according to the present invention, $FeNaSnO_4$ may be precipitated in the inside thereof. These components can further increase the stability of the battery characteristics.

The crystallinity of the negative electrode active material is preferably not less than 30% by mass, more preferably not less than 40% by mass, and particularly preferably not less than 50% by mass. The greater the crystallinity, the more easily the initial irreversible capacity can be reduced. However, if the crystallinity is too large, the cycle characteristic tends to decrease. Therefore, from the viewpoint of increasing the cycle characteristic, the crystallinity is preferably not more than 99% by mass, more preferably 95% by mass, and particularly preferably not more than 90% by mass.

The crystallinity can be determined from a diffraction line profile at 2θ values of 10° to 60°, which is obtained by powder X-ray diffraction measurement (XRD) using CuKα rays. Specifically, the background is subtracted from a diffraction line profile obtained by powder X-ray diffraction measurement (XRD) to obtain a total scattering curve, a broad diffraction curve (amorphous halo) at 10° to 45° is peak-separated from the total scattering curve and integrated in intensity, the obtained integrated intensity of the halo is represented as Ia, each of crystalline diffraction lines detected at 10° to 60° is peak-separated from the total scattering curve and integrated in intensity, and the sum of the obtained integrated intensities of the crystalline diffraction lines is represented as Ic. In this case, the crystallinity Xc can be determined from the following equation.

$$Xc = [Ic/(Ic+Ia)] \times 100 \ (\%)$$

The form of the negative electrode active material is not particularly limited, but is preferably a powder form. The average particle diameter of the negative electrode active material is preferably not less than 0.1 μm, more preferably not less than 0.2 μm, even more preferably not less than 0.3 μm, particularly preferably not less than 0.5 μm, preferably not more than 20 μm, more preferably not more than 15 μm, even more preferably not more than 10 μm, and particularly preferably not more than 5 μm. The maximum particle diameter of the negative electrode active material is preferably not more than 150 μm, more preferably not more than 100 μm, even more preferably not more than 75 μm, and particularly preferably not more than 55 μm. If the average particle diameter or the maximum particle diameter of the negative electrode active material is too large, this makes it impossible to mitigate the volume change of the negative electrode active material due to absorption and release of sodium ions during charge and discharge and thus the cycle characteristic tends to significantly decrease. On the other hand, if the average particle diameter of the negative electrode active material is too small, its powder dispersion state when it is formed into paste becomes poor, which tends to make it difficult to produce a uniform electrode. In addition, a precipitated Fe-Sn-based alloy, such as $FeSn_2$, is likely to be oxidized by oxygen in the atmosphere.

Herein, the average particle diameter and the maximum particle diameter refer to a median primary particle diameter $D_{50}$ (diameter at 50% cumulative volume) and a median primary particle diameter $D_{90}$ (diameter at 90% cumulative volume), respectively, and are values measured by a laser diffraction particle size distribution measurement device.

In order to obtain powder of a desired size, a general grinder or classifier is used. In order to obtain powder of a desired size, for example, a mortar, a ball mill, a vibrating ball mill, a satellite ball mill, a planetary ball mill, a jet mill, sieving, centrifugation, air classification or others are used.

The negative electrode active material according to the present invention can be produced by subjecting an oxide material as a raw material to heat treatment while supplying it to a reducing gas. Thus, SnO and $Fe_2O_3$ contained in the oxide material are reduced to a Fe-Sn-based alloy, such as $FeSn_2$.

The oxide material is produced by melting a raw material powder prepared to have a composition as described previously by heating, for example, at 600°C to 1500°C into a homogeneous melt, and then solidifying the melt by cooling. The obtained solidified product from melt is, as necessary, subjected to post-processing, such as grinding or classification.

A furnace, such as an electric heating furnace, a rotary kiln, a microwave heating furnace or a high-frequency heating furnace, laser irradiation or others can be used for the melting by heating.

The oxide material is produced by melting part of the composition by heating to make it into a homogeneous melt and then solidifying the melt by cooling. Alternatively, the oxide material may be produced by mixing solidified powder from melt obtained by subjecting the solidified product to post-processing, such as grinding or classification, and powder of the rest of the composition and subjecting the mixture to mechanomilling processing.

The oxide material is preferably amorphous and, thus, the negative electrode active material according to the present invention can be easily obtained which is made of a crystallized glass formed by a Fe-Sn-based alloy, such as $FeSn_2$, being precipitated in a matrix containing $SiO_2$. Crystals of SnO or the like may be precipitated in the inside of the oxide material. Furthermore, the matrix may contain $Fe_2O_3$.

The form of the oxide material is not particularly limited, but is preferably a powder form like the negative electrode active material. The average particle diameter of the oxide material is preferably 0.1 $\mu$m to 20 $\mu$m, more preferably 0.2 $\mu$m to 15 $\mu$m, even more preferably 0.3 $\mu$m to 10 $\mu$m, and particularly preferably 0.5 $\mu$m to 5 $\mu$m. The maximum particle diameter of the oxide material is, for example, preferably not more than 150 $\mu$m, more preferably not more than 100 $\mu$m, even more preferably not more than 75 $\mu$m, and particularly preferably not more than 55 $\mu$m. If the average particle diameter or the maximum particle diameter of the oxide material is too large, the particle diameter of the obtained negative electrode active material also becomes large and, therefore, inconveniences as described previously tend to occur. In addition, SnO and $Fe_2O_3$ may not be able to be sufficiently reduced to a Fe-Sn-based alloy, such as $FeSn_2$, by a reducing gas. On the other hand, if the average particle diameter of the oxide material is too small, the particle diameter of the obtained negative electrode active material also becomes small and, therefore, inconveniences as described previously tend to occur.

The heating temperature during the heat treatment is, for example, preferably not lower than 250°C, more preferably not lower than 300°C, and particularly preferably not lower than 400°C. If the heating temperature is too low, heat energy to be given becomes small and, therefore, SnO and $Fe_2O_3$ in the oxide material are less likely to be reduced to a Fe-Sn-based alloy, such as $FeSn_2$. The upper limit of the heating temperature is not particularly limited, but an excessively high upper limit may cause particles of the reduced Fe-Sn-based alloy, such as $FeSn_2$, to be easily coarsened, which may significantly decrease the cycle characteristic of the negative electrode active material. Therefore, the heating temperature is preferably not higher than 700°C and particularly preferably not higher than 600°C.

The heating time for the heat treatment is preferably 20 minutes to 1000 minutes and particularly preferably 60 minutes to 500 minutes. If the heating time is too short, heat energy to be given becomes small and, therefore, SnO and $Fe_2O_3$ in the oxide material are less likely to be reduced to a Fe-Sn-based alloy, such as $FeSn_2$. On the other hand, if the heating time is too long, particles of the reduced Fe-Sn-based alloy, such as $FeSn_2$, are easily coarsened, which may significantly decrease the cycle characteristic of the negative electrode active material.

A furnace, such as an electric heating furnace, a rotary kiln, a microwave heating furnace or a high-frequency heating furnace, laser irradiation or others can be used for the heat treatment.

An example of the reducing gas during the heat treatment is at least one type of gas selected from among $H_2$, $NH_3$, CO, $H_2S$, and $SiH_4$. From the viewpoint of handleability, at least one type of gas selected from among $H_2$, $NH_3$, and CO is preferred as the reducing gas and $H_2$ is particularly preferred as the reducing gas.

In the case of using $H_2$ as the reducing gas, it is preferably used by mixing it with an inert gas, such as $N_2$ or Ar, for the purpose of reducing the risk of explosion and so on. The mixing ratio between the inert gas and $H_2$ is, in terms of % by volume, preferably 85%-99.5% inert gas to 0.5%-15% $H_2$, more preferably 87%-99% inert gas to 1%-13% $H_2$, and even more preferably 89%-99% inert gas to 1%-11% $H_2$.

In the heat treatment process, the oxide material (oxide material powder) tends to flow in a softened state to form agglomerates. If the oxide material forms agglomerates, the reducing gas is less likely to permeate throughout the oxide material and, therefore, it tends to take a long time to reduce the oxide material. Alternatively, particles of the produced negative electrode active material may be coarsened to decrease the battery characteristics. Therefore, in subjecting the oxide material to heat treatment, an anti-agglomeration agent is preferably added. By doing so, the agglomeration of the oxide material during heat treatment can be reduced and SnO and $Fe_2O_3$ in the oxide material can be reduced to a Fe-Sn-based alloy, such as $FeSn_2$, in a short time.

Examples of the anti-agglomeration agent include carbon materials, such as conductive carbon and acetylene black. Carbon materials also have electronic conductivity and, therefore, can give the negative electrode active material electrical conductivity. Particularly, acetylene black, which has excellent electronic conductivity, is preferred as the carbon material.

The oxide material and the anti-agglomeration agent are preferably mixed in a ratio of, in terms of % by mass, 80%-99.5% oxide material to 0.5%-20% anti-agglomeration agent. By doing so, a negative electrode active material having a good initial charge characteristic and a stable cycle characteristic can be easily obtained.

When a binder and a conductive agent are added to the negative electrode active material according to the present invention, the mixture can be used as a negative electrode material for a power storage device.

Examples of the binder include: water-soluble polymers, such as cellulose derivatives, including carboxymethyl cellulose, hydroxypropylmethyl cellulose, hydroxypropyl cellulose, hydroxyethyl cellulose, ethyl cellulose, and hydroxymethyl cellulose, or polyvinyl alcohol; thermosetting resins, including thermosetting polyimide, phenolic resin, epoxy resin, urea resin, melamine resin, unsaturated polyester resin, and polyurethane; and polyvinylidene fluoride.

Examples of the conductive agent include: highly electrically conductive carbon blacks, such as acetylene black and Ketjenblack, graphite powder, and other types of carbon powder; and fibrous carbons, such as carbon fibers and carbon nanotubes.

The negative electrode material for a power storage device can be used as a negative electrode for a power storage device by applying the negative electrode material for a power storage device to the surface of a metal foil or the like serving as a current collector.

In the present invention, it is possible to apply a negative electrode material for a power storage device, which contains the oxide material not subjected to the heat treatment, to the surface of a metal foil or the like, followed by heat treatment.

For example, it is possible to apply a negative electrode material for a power storage device, which contains the oxide material not subjected to the heat treatment and, as necessary, a binder and a conductive agent, to the surface of a metal foil or the like, followed by heat treatment by irradiation of laser light.

In doing so, the irradiation of laser light is preferably performed while a reducing gas is supplied, like the above-described heat treatment without using laser light. In this case, the oxide material can be crystallized by irradiation of laser light, thus obtaining a negative electrode active material.

However, in the present invention, a negative electrode active material may be obtained by performing irradiation of laser light under a non-reducing atmosphere and then further performing heat treatment with the supply of a reducing gas to crystallize the oxide material.

The wavelength of the laser light is preferably in the near-infrared region to the infrared region. Specifically, the wavelength of the laser light is preferably 750 nm to 1600 nm, more preferably 900 nm to 1400 nm, even more preferably 950 nm to 1200 nm, and particularly preferably 1000 nm to 1100 nm, in which case laser light in this range is preferred because it can be easily absorbed by a laser light-absorbing component.

Therefore, the laser light is preferably one that can emit light of wavelengths in the above range and examples include a semiconductor laser, a YAG laser, a Yb fiber laser, and a YVO4 laser.

The negative electrode active material for a sodium-ion secondary battery according to the present invention is also applicable to, for example, a hybrid capacitor in which a negative electrode active material for use in a sodium-ion secondary battery is combined with a positive electrode material for a nonaqueous electric double layer capacitor.

A sodium-ion capacitor, which is a hybrid capacitor, is a type of asymmetric capacitor having different charge/discharge principles between the positive and negative electrodes. The sodium-ion capacitor has a structure in which a negative electrode for a sodium-ion secondary battery is combined with a positive electrode for an electric double layer capacitor. In this case, the positive electrode has an electric double layer formed on the surface thereof and is charged and discharged using a physical action (electrostatic action), while the negative electrode is charged and discharged, like the sodium-ion secondary battery, by a chemical reaction (absorption and release) of sodium ions.

For the positive electrode of the sodium-ion capacitor, a positive electrode active material is used which is made of, for example, carbonaceous powder having a high specific surface area, such as activated charcoal, polyacene or mesophase carbon. On the other hand, for the negative electrode thereof, the negative electrode active material according to the present invention can be used.

[Examples]

Hereinafter, the present invention will be described in detail with reference to examples, but the present invention is not limited to these examples.

Table 1 shows Examples 1 to 4 and Comparative Example 1.

[Table 1]

| | | Ex. 1 | Ex. 2 | Ex. 3 | Ex. 4 | Comp. Ex. 1 |
|---|---|---|---|---|---|---|
| Oxide Material | Composition (% by mole) — SnO | 55 | 55 | 55 | 55 | 55 |
| | Na$_2$O | 15 | 15 | 15 | 15 | 15 |
| | Fe$_2$O$_3$ | 2.25 | 4.5 | 6.25 | 9 | |
| | SiO$_2$ | 27.75 | 25.5 | 23.75 | 21 | 30 |
| | Amorphous content (% by mass) | 100 | 100 | 100 | 100 | 100 |
| | Precipitated crystals | — | — | — | — | — |
| Heat Treatment Conditions | | 450°C 10 hours N$_2$:H$_2$=90:10 | 450°C 10 hours N$_2$:H$_2$=90:10 | 450°C 10 hours N$_2$:H$_2$=90:10 | 450°C 10 hours N$_2$:H$_2$=90:10 | 450°C 10 hours N$_2$:H$_2$=90:10 |
| Negative Electrode Active Material | Type of crystals | β-Sn, FeSn$_2$ | β-Sn, FeSn$_2$ | β-Sn, FeSn$_2$ | β-Sn, FeSn$_2$, FeNaSnO$_4$ | β-Sn |
| | Amount of FeSn$_2$ crystals(% by mass) | 2 | 35 | 53 | 37 | 0 |
| | Amount of β-Sn crystals(% by mass) | 53 | 49 | 21 | 26 | 86 |
| | Amount of FeNaSnO$_4$ crystals(% by mass) | 0 | 0 | 0 | 5 | 0 |
| | Total crystallinity (% by mass) | 55 | 84 | 74 | 68 | 86 |
| Battery Characteristics | Initial charge capacity (mAh/g) | 286 | 269 | 351 | 307 | 375 |
| | Initial coulombic efficiency (%) | 32 | 43 | 48 | 38 | 44 |
| | Maximum coulombic efficiency in 2nd to 50th cycles (%) | 99 | 100 | 104 | 100 | 134 |
| | Minimum coulombic efficiency in 2nd to 50th cycles (%) | 87 | 84 | 95 | 91 | 44 |

(1) Production of Oxide Material

Using various types of source materials for oxides, source materials of carbonates, and so on, a raw material powder was prepared so that three components Na$_2$O, Fe$_2$O$_3$, and SiO$_2$ of components described in Table 1 had a composition shown in Table 1. The obtained raw material powder was put into a melting container, melted in the air at 1400°C in an electric heating furnace, then poured between a pair of cooling rollers to form the melt into a film. The obtained film-shaped formed body was ground in a ball mill, thus producing a matrix material powder with an average particle diameter of 2 $\mu$m.

The obtained matrix material powder was mixed with a raw material powder of SnO to give a composition shown in Table 1, the mixture was put into a 45 mL planetary ball mill (apparatus name: PULVERISETTE 7 Classic Line, manufactured by Fritch GmbH) into which stainless steel beads were put, and the mixture was subjected to mechanomilling processing for an hour at a number of revolutions of 700 rpm in the air atmosphere using the planetary ball mill, thus producing an oxide material powder. When the respective obtained oxide material powders were subjected to powder X-ray diffraction measurement (XRD) to identify their structures, they were amorphous and no crystal was detected from them.

(2) Production of Negative Electrode Active Material

Each of the obtained oxide material powders was subjected to heat treatment under conditions for ten hours at an atmospheric temperature of 450°C in an atmosphere of a mixed gas of 90% by volume $N_2$ and 10% by volume $H_2$. The oxide material after the heat treatment was pulverized using a mortar and a pestle, thus obtaining a negative electrode active material powder having an average particle diameter of 2 $\mu$m. When the structures of the obtained negative electrode active material powders were analyzed by XRD, crystals of the crystal type or types shown in Table 1 at the amount of crystals shown in Table 1 were precipitated in the negative electrode active material powders.

(3) Production of Negative Electrode

Each of the negative electrode active material powders, carbon black as a conductive agent, and thermosetting polyimide resin as a binder were weighed to reach a mass ratio of 80:5:15 and dehydrated N-methylpyrrolidinone was added to the mixture, thus making a slurry. The obtained slurry was coated on a copper foil and the copper foil was vacuum-dried at 80°C for an hour and then at 200°C for six hours and then pressed by passing it between a pair of rotating rollers, thus obtaining an electrode sheet. This electrode sheet was punched out into an 16mm diameter disc by an electrode cutting machine, thus producing a punched-out negative electrode.

(4) Production of Test Cell

Each of the obtained negative electrodes, a separator formed of a 16mm diameter polypropylene porous film dried at 70°C for eight hours under reduced pressure, and a metal sodium layer as a counter electrode were laminated, and the laminate was infiltrated with an electrolytic solution, thus producing a test cell. A 1M solution of $NaPF_6$ in EC/DEC (EC:DEC = 1:1, where EC is ethylene carbonate and DEC is diethyl carbonate) was used as the electrolytic solution. The assembly of the test cell was conducted in an argon environment at a dew-point temperature of -70°C or lower.

(5) Charge and Discharge Test

The respective produced test cells were CC (constant-current) charged at 25°C from an open circuit voltage to 0 V (absorption of sodium ions into the negative electrode active materials) and their amounts of electricity charged to the negative electrode active materials per unit mass (their charge capacities) were determined. Next, the test cells were CC discharged from 0 V to 2 V (release of sodium ions from the negative electrode active materials) and their amounts of electricity discharged from the negative electrode active materials per unit mass (their discharge capacities) were determined. The C-rate was set to 0.1 C. With a combination of the above charge and discharge as one cycle, 50 cycles of charge and discharge were conducted. From these results, the coulombic efficiencies ((discharge capacity)/(charge capacity)) in the individual cycles were determined.

Fig. 1 is a graph showing battery characteristics in each cycle of the test cell produced in Example 3. Fig. 2 is a graph showing battery characteristics in each cycle of the test cell produced in Comparative Example 1. As shown in Fig. 1, it can be seen that, in the test cell produced in Example 3, the battery characteristics, including the charge capacity, the discharge capacity, and the coulombic efficiency, were stable in each of the 2nd to 50th cycles. On the other hand, in the test cell produced in Comparative Example 1, the battery characteristics, including the charge capacity, the discharge capacity, and the coulombic efficiency, were not stable particularly in each of the 15th to 30th cycles.

Furthermore, Table 1 shows the maximum and minimum values of the coulombic efficiencies in the 2nd to 50th cycles in each of the examples and comparative example. As shown in Table 1, since in Examples 1 to 4 the composition contained $Fe_2O_3$ and 2% by mass to 53% by mass of $FeSn_2$ was precipitated, variations in coulombic efficiency in the 2nd to 50th cycles were small. On the other hand, since in Comparative Example 1 the composition did not contain $Fe_2O_3$ and

any Fe-Sn-based alloy, such as $FeSn_2$, was not precipitated, variations in coulombic efficiency in the 2nd to 50th cycles were large.

[Industrial Applicability]

The negative electrode active material according to the present invention can be suitably used for sodium-ion secondary batteries for use as main power supplies or the like of, for example, mobile communication devices, portable electronic devices, electric bicycles, electric motorcycles, and electric vehicles.

**Claims**

1. A negative electrode active material for a sodium-ion secondary battery, the negative electrode active material containing: an amorphous phase containing $SiO_2$; and a Fe-Sn-based alloy.

2. The negative electrode active material for a sodium-ion secondary battery according to claim 1, the negative electrode active material containing, in terms of % by mole of oxide, 30% to 90% SnO, 2% to 69% $SiO_2$, and 1% to 20% $Fe_2O_3$.

3. The negative electrode active material for a sodium-ion secondary battery according to claim 1 or 2, wherein the Fe-Sn-based alloy is $FeSn_2$.

4. The negative electrode active material for a sodium-ion secondary battery according to claim 1 or 2, the negative electrode active material being made of a crystallized glass formed by the Fe-Sn-based alloy being precipitated in a matrix made of the amorphous phase.

5. The negative electrode active material for a sodium-ion secondary battery according to claim 1 or 2, the negative electrode active material having a crystallinity of not less than 30% by mass and not more than 99% by mass.

6. The negative electrode active material for a sodium-ion secondary battery according to claim 1 or 2, wherein an amount of crystals of the Fe-Sn-based alloy is not less than 0.5% by mass and not more than 70% by mass.

7. The negative electrode active material for a sodium-ion secondary battery according to claim 1 or 2, the negative electrode active material further containing $\beta$-Sn.

[FIG. 1.]

[FIG. 2.]

## INTERNATIONAL SEARCH REPORT

International application No.

**PCT/JP2023/025941**

| A. | CLASSIFICATION OF SUBJECT MATTER |
|---|---|

*H01M 4/38*(2006.01)i; *H01G 11/06*(2013.01)i; *H01G 11/30*(2013.01)i; *H01G 11/46*(2013.01)i; *H01G 11/62*(2013.01)i; *H01M 4/36*(2006.01)i; *H01M 4/48*(2010.01)i
FI: H01M4/38 Z; H01M4/48; H01M4/36 E; H01G11/30; H01G11/46; H01G11/62; H01G11/06

According to International Patent Classification (IPC) or to both national classification and IPC

| B. | FIELDS SEARCHED |
|---|---|

Minimum documentation searched (classification system followed by classification symbols)

H01M4/38; H01G11/06; H01G11/30; H01G11/46; H01G11/62; H01M4/36; H01M4/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP 2016-522557 A (CENTRE NATIONAL DE LA RECHERCHE SCIENTIFIQUE) 28 July 2016 (2016-07-28)<br>claims | 1-7 |
| A | JP 2014-229539 A (NIPPON ELECTRIC GLASS CO) 08 December 2014 (2014-12-08)<br>claims | 1-7 |
| A | JP 2010-161078 A (PANASONIC CORP) 22 July 2010 (2010-07-22)<br>claims | 1-7 |
| A | US 2015/0004490 A1 (WANG, Xiaoliang) 01 January 2015 (2015-01-01)<br>entire text, all drawings | 1-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 564 473 A1

## INTERNATIONAL SEARCH REPORT
### Information on patent family members

International application No.

**PCT/JP2023/025941**

| Patent document cited in search report | | | Publication date (day/month/year) | Patent family member(s) | | | Publication date (day/month/year) |
|---|---|---|---|---|---|---|---|
| JP | 2016-522557 | A | 28 July 2016 | US<br>claims<br>EP<br>FR<br>CN | 2016/0141611<br><br>3011622<br>3007204<br>105659414 | A1<br><br>A1<br>A1<br>A | |
| JP | 2014-229539 | A | 08 December 2014 | (Family: none) | | | |
| JP | 2010-161078 | A | 22 July 2010 | US<br>claims<br>EP<br>DE<br>AT<br>CN<br>KR | 6544687<br><br>1122802<br>60033128<br>352877<br>1316108<br>10-2004-0028982 | B1<br><br>A1<br>T2<br>T<br>A<br>A | |
| US | 2015/0004490 | A1 | 01 January 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014229539 A